# EUROPEAN PATENT APPLICATION

(11) **EP 3 783 051 A1**
(43) Date of publication of application: **24.02.2021**
(21) Application number: 19192715.1
(22) Date of filing: 20.08.2019
(51) Int. Cl.: C08J 3/24, C08G 59/18, C08G 59/50, C08L 63/00, C09J 163/00, C09J 7/30

(54) **ADHERABLE ELEMENT WITH PRESSURE-ACTIVATED ADHESIVE SYSTEM**

(71) Applicant: D. Swarovski KG, 6112 Wattens (AT)
(72) Inventor: RICHTER, Gerhard, 6060 Hall in Tirol (AT); FRITSCH, Andreas, 6116 Weer (AT); THALINGER, Ramona, 6111 Volders (AT); PACHLER, Werner, 6263 Fügen (AT)
(74) Representative: Weal, Emily Teresa

(57) **Abstract**

An adherable element is disclosed, comprising a decorative element having a support surface, and a pressure activated adhesive system pre-coated on the support surface of the decorative element for adhering the decorative element to a surface, the adhesive remaining uncured until activated by application of a threshold pressure. The adhesive comprises a matrix comprising a hardener and a plurality of microcapsules filled with an adhesive resin, the microcapsules being configured to rupture on application of the threshold pressure, thereby exposing the resin to the matrix and allowing the resin to react with the hardener to form an adhesive bond between the decorative element and the surface. The matrix further comprises a rheology additive such that the matrix has a higher viscosity than the hardener at room temperature. Methods of making an adherable element, and decorative articles comprising the adherable element are also disclosed.

## Description

### Field of the Invention

The present disclosure relates to an adherable element having a pre-applied pressure-activated adhesive system, and to a decorative article comprising a surface and one or more decorative elements adhered onto the surface with the pressure-activated adhesive system. Aspects of the invention also extend to a method of making the adherable element and a method of making the decorative article.

### Background

It is common for a decorative article to be embellished with decorative elements such as crystals by adhering the decorative element to a decorative surface. Examples of such decorative articles are crystal-encrusted mobile phone covers, jewel-embellished fabrics or items of clothing, fashion accessories, items of decoration and jewellery pieces.

It is often necessary to apply the decorative elements with a high degree of precision to achieve the desired arrangement of decorative elements on the decorative surface, especially when designs are delicate and/or complex. For this reason, it is common to apply the decorative elements by hand. Even if precise placement is not crucial, decorative elements may also be applied by hand for small-scale artisanal production, where machine application is not feasible or cost-effective.

Typically, decorative elements are glued onto the surface using an adhesive. This is a two-stage process in which firstly an uncured liquid adhesive is coated onto each element or on a decorative surface, and secondly each element is pressed onto the decorative surface and left in place until the adhesive cures.

Adhesives may be one-part or two-part adhesives. One-part adhesives comprise a single adhesive component, and curing can be initiated by exposure to heat, light or moisture in the air. Such adhesives are convenient to use, but the adhesive bond is typically relatively weak. Further, their shelf life is limited and special transport and storage conditions are necessary, since accidental exposure can initiate curing. Two-part adhesives comprise a resin and a co-reactant, sometimes called a hardener, that reacts with the resin to cure it, thereby forming the adhesive bond. The two components must be mixed together prior to application on the surface of the decorative element, at which point curing is already initiated. With curing underway, the user then has a limited time to apply the decorative element to the decorative surface before curing is complete, thus two-part adhesives can be difficult to dispense and use.

For decorative articles, a two-part adhesive is generally preferred, to ensure that the decorative elements are sufficiently well-bonded to the decorative surface to withstand the wear-and-tear of every-day handling.

The use of two-part adhesives to apply decorative elements in this way has several drawbacks. Firstly, once the liquid adhesive has been applied, it is difficult to handle the decorative elements cleanly. Before the adhesive is fully cured, the decorative articles need to be handled very carefully to prevent the decorative elements from falling or moving, which can limit the design freedom available. Secondly, once the adhesive components have been mixed, the adhesive must be quickly processed and applied onto the decorative surface, in the correct position, before full curing has taken place. This limits the amount of adhesive that can be mixed in a single batch, and the resulting time-pressure can lead to errors in placement. Thirdly, applying the adhesive by hand and under time pressure can make it difficult to apply the adhesive evenly across the surface of the decorative element or decorative surface, as the case may be, and in the correct amount to ensure good adhesion whilst avoiding excess adhesive that would distort the appearance of the decorative element.

The present invention aims to address some of the disadvantages associated with these known adhesives and processes.

### Statements of Invention

Against this background, the invention resides in an adherable element comprising a decorative element having a support surface, and a pressure activated adhesive system pre-coated on the support surface of the decorative element for adhering the decorative element to a surface, the adhesive remaining uncured until activated by application of a threshold pressure. The pressure activated adhesive system comprises a matrix comprising a hardener, and a plurality of microcapsules filled with an adhesive resin, the microcapsules being configured to rupture on application of the threshold pressure, thereby exposing the resin to the matrix and allowing the resin to react with the hardener to form an adhesive bond between the decorative element and the surface. The matrix further comprises a rheology additive such that the matrix has a higher viscosity than the hardener at room temperature.

The matrix comprising the rheology additive may have a viscosity such that a force of at least 0.2 N/mm², preferably at least 0.3 N/mm² or at least 0.4 N/mm² is necessary to move an element partially embedded within the matrix.

The rheology additive may be a liquid, a polymer dispersion, or a solid powder. The rheology additive may be a material that is waxy at room temperature. The hardener, the microcapsules and the rheology additive may together form a composition that is waxy at room temperature. The adhesive system comprising the hardener, the microcapsules and the rheology additive may be waxy at room temperature. Within the context of this disclosure, room temperature means about 25°C.

The rheology additive may comprise an amine-epoxy adduct material and/or an amino-oligomer, and/or a solid inert powder, preferably wherein the powder has an average particle diameter below 10µm and/or wherein the powder is inorganic.

The rheology additive may be an abrasive power. The rheology additive may be Anquamine 401, Epilink 701 or Anquamine 721.

The hardener may comprise an amine.

The powder may not have a sponge like morphology. The powder may be an alumina or silica powder. The powder may be a fumed silica powder. The powder may comprise at least some particles that have sharp edges.

The rheology additive may be present at a concentration of at least 10% by weight of the matrix, preferably at least 20% by weight, and preferably between 20% and 50% by weight of the matrix.

The adhesive resin may comprise an epoxy resin, preferably based on the diglycidyl ethers of Bisphenol A, Bisphenol F, aliphatic diols or polyols.

The outer wall of the microcapsules may comprise a polymer, preferably selected from the group consisting of polyacrylate, an aminoplast polymer or alginate. The outer wall of the microcapsules may comprise a melamin-formaldehyde resin.

The ratio by weight of an outer wall of the microcapsules to the adhesive resin inside the microcapsules may be between approximately 4 to 96 and 1 to 2. The ratio may be between approximately 1 to 3 and approximately 1 to 1.

The microcapsules may be configured such that the threshold pressure is in the range of approximately 1 N/m² to approximately 4 N/m².

The microcapsules may be between approximately 30 µm and approximately 150 µm in diameter, preferably between 30 µm and 100 µm, or between 30 µm and 60 µm, and/or an outer wall of the microcapsules is between approximately 50 nm and 2 µm thick, preferably between approximately 50 nm and approximately 1500 nm, between approximately 200 nm and 1 µm, such as about 300 to 500 nm.

The hardener may comprise a material that is a liquid at room temperature.

The outer wall material of the microcapsules may be chemically inert to the matrix outside the microcapsules and chemically inert to the adhesive resin inside the microcapsules
The microcapsules may form a suspension with the matrix. The microcapsules may be evenly dispersed within the matrix.

The adhesive resin inside the microcapsules may have a room temperature viscosity of between approximately 500 mPa.s and approximately 900 mPa.s.

The adhesive system may be applied to the decorative element as a layer which may have a thickness of between approximately 100 µm and approximately 2 mm, preferably approximately 500 µm.

The decorative element may be a faceted decorative element, such as a gemstone. The faceted decorative element may be made of glass, crystal glass, plastic or cubic zirconia.

The invention also extends to a decorative article comprising a decorative surface and at least one decorative element, which may be obtained by applying the adherable element above to the decorative surface, and curing the adhesive.

The invention further extends to a method of making an adherable element comprising a decorative element having a support surface, and a pressure-activated adhesive system pre-coated on the support surface of the decorative element for adhering the decorative element to a surface, the adhesive remaining uncured until activated by application of a threshold pressure. The method may comprise:
providing a plurality of resin-filled microcapsules being between approximately 1 µm and approximately 150 µm in diameter and having an outer wall with a thickness of between approximately 0.5 µm and approximately 2 µm;
providing a matrix material, the matrix material comprising a hardener and a rheology additive;
mixing the resin-filled microcapsules and matrix material to form the pressure-activated adhesive system; and
applying the pressure-activated adhesive system to at least a portion of the support surface of the decorative element.

The adhesive system may be applied to the decorative element as a layer which has a thickness of between approximately 100 µm and approximately 2 mm, preferably approximately 500 µm.

The method may further comprise allowing the pressure-activated adhesive system to dry for at least 24 hours.

The invention further extends to a method of adhering a decorative element to a decorative surface, the method comprising providing the adherable element, placing the adherable element on the decorative surface with the adhesive between the decorative surface and the support surface of the decorative element, and applying a pressure greater than or equal to the threshold pressure to the decorative element, thereby causing the adhesive to form an adhesive bond between the decorative element and the surface.

The invention further extends to an adherable element comprising a decorative element having a support surface, and an uncured adhesive layer applied to the support surface, the uncured adhesive layer comprising a matrix comprising a hardener; and a plurality of microcapsules filled with an adhesive resin, the microcapsules being configured to rupture on application of a threshold pressure in the range of 1 N/m² to 4 N/m², thereby exposing the resin to the matrix and allowing the resin to react with the hardener to form an adhesive bond between the decorative element and the surface.

Features of any one aspect or embodiment of the invention may be used, alone or in appropriate combination, with other aspects and embodiments as appropriate.

### Brief Description of the Drawings

Embodiments of the invention will now be described, by way of example only, with reference to the accompanying drawings, in which:
Figure 1 is a front view of an adherable element comprising a decorative element in the form of a crystal with a pressure-activated adhesive pre-applied to a surface, ready for application to a decorative surface;
Figure 2 is a partial enlarged view of the surface of the decorative element and the pressure-activated adhesive of the adherable element of Figure 1;
Figures 3a and 3b are front views and cross-sectional views respectively of a microcapsule forming part of the pressure-activated adhesive of Figures 1 and 2;
Figure 4 is a scanning electron microscope image (magnification 2500x) of a fumed silica powder suitable for use as a rheology additive in the preparation of a pressure activated adhesive as shown on Figure 1;
Figure 5 is a bar chart showing the force necessary to move a decorative element partially embedded within a matrix suitable for use in the preparation of a pressure activated adhesive, depending on the composition of the matrix layer - composition F330A is the same base composition as composition F344/F305, but composition F330A additionally comprises 2% by weight of Laponite SD25 and 30% by weight of AMOSIL®FW600;
Figure 6 is a bar chart showing the tensile strengths of cured layers of pressure-activated adhesives depending on the concentration of a rheology additive (silica powder, AMOSIL® FW600) suitable for use in the preparation of a pressure activated adhesive as shown on Figure 1 - sample F337 comprises 50% by weight (total weight of the matrix composition) of the silica powder, sample F335A comprises 30% by weight (total weight of the matrix composition) of the silica powder, and sample F335B does not comprise the silica powder; and
Figures 7A and 7B are scanning electron microscope images of examples of microcapsules suitable for use in the preparation of a pressure activated adhesive as shown on Figure 1, Figure 7B showing a cross-section through a capsule as shown on Figure 7A.

### Description of an Embodiment of the Invention

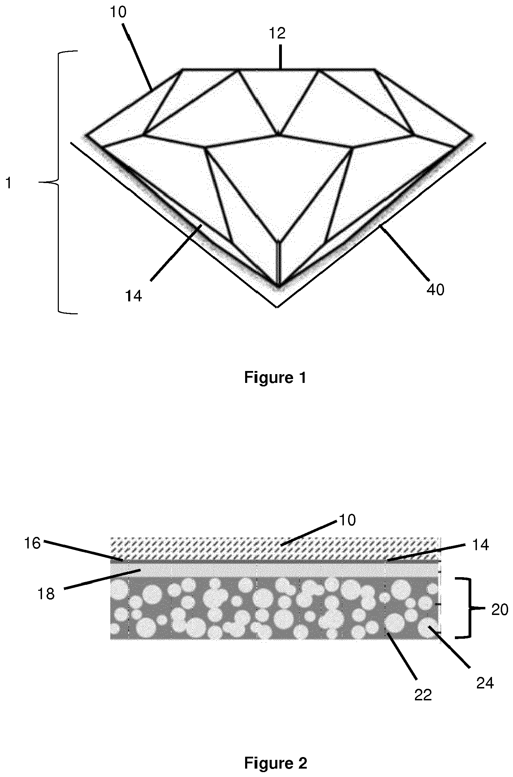

Figure 1 illustrates an adherable element 1 that can be applied to a decorative surface 40 for decorative purposes. In particular, the adherable element 1 is suitable for application to the decorative surface 40 by hand, or using only simple hand-held tools, as well as for application by machine.

The adherable element 1 comprises a decorative element 10 and a pressure-activated adhesive 20. The pressure-activated adhesive 20 is specifically configured to be activated at a threshold pressure that can be readily applied by hand, and to be able to cling securely to the decorative element 10 without running off. In this way, the adherable element 1 can be stored and handled with the adhesive layer 30 in place, so that the adherable element 1 is ready for instant application to a decorative surface simply by pushing the adherable element 1 onto the surface by hand.

In the embodiment shown, the decorative element 10 is exemplified as a crystal of faceted glass. However, the decorative element may be any element that is used for decorative purposes: for example, a natural or synthetic bead or crystal of glass, ceramic, glass-ceramic, a precious or semi-precious gemstone, or any other naturally occurring or synthetic stone, which may be of any suitable size or shape.

The crystal 10 includes an outward-facing surface 12 and a support surface 14. In the embodiment shown, the outward-facing surface 12 is defined by a crown of the crystal, and the support surface 14 is defined by a pavilion of the crystal. However, other geometries are envisaged: for example, the decorative element may be a flat-back element having a flat support surface 14, or it may be a cabochon having a rounded outward-facing surface 12, or it may be a spherical object such as a pearl or bead. Referring to Figure 2, in the embodiment shown, a coating consisting of two layers 16, 18 is provided on the support surface 14 of the crystal 10.

The first layer is a reflective mirror layer 16, which may be made of any suitable reflective material such as silver, aluminium, chromium or another suitable metallic material. An additional protective layer 18, made of a suitable protective material (for example a material with relatively high hardness), such as an alkyd resin, silicon nitride, silicon oxide or any other suitable material, covers the reflective mirror layer 16 to provide protection, for example to protect the reflective mirror layer 16 from scratches during transportation and handling.

The layer of pressure-activated adhesive 20 is pre-applied to the support surface 14 such that it contacts the protective layer 18. In the embodiment shown, the pressure-activated adhesive covers the majority of the support surface 14, though in other embodiments the adhesive 20 may cover only a small portion, for example as little as 5% of the support surface 14.

The pressure-activated adhesive 20 is designed so as to be suitable for pre-application to decorative elements that are to be applied by hand to a decorative surface 40. In particular, the pressure-activated adhesive 20 is designed to be deliberately activated at relatively low pressures of the sort that can be easily and deliberately applied by hand (for example, at pressures less than 4 N/mm²), but also designed to avoid accidental activation at the sorts of pressures that might feasibly be applied during the course of handling and transportation (for example, at pressures below 1 N/mm²). The pressure-activated adhesive 20 is also designed to cling securely to the support surface 14 of the crystal 10 as a single continuous layer without dissociating or flowing away from the support surface 14 during handling. This careful balance of properties of the pressure-activated adhesive 20 is achieved with a particular adhesive configuration, as will now be described.

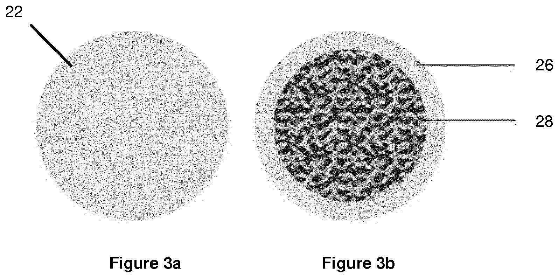

With reference to Figures 2 and 3, the pressure activated adhesive system 20 comprises microcapsules 22 dispersed in a matrix 24. The microcapsules 22 contain a resin 28 that is liquid at room temperature. The matrix 24 is preferably semi-solid at room temperature and comprises one or more materials that act as a hardener, and one or more materials that act as a rheology additive. The matrix 24 may be semi-solid in isolation and/or when combined with the microcapsules 22. In other words, the composition (pressure activated adhesive system 20) comprising the microcapsules 22 and the matrix 24 may be semi-solid even if the matrix alone is not semi-solid, for example because the microcapsules reduce the relative amount of liquid in the composition.

The microcapsules 22 are capable of rupturing when sufficient pressure is applied, upon which the liquid resin 28 flows from the microcapsules 22 to mix with the surrounding matrix 24. This mixing allows a reaction between the resin 28 and the hardener in the matrix 24, which cures the resin to set the adhesive, thereby forming an adhesive bond.

Considering the resin 28 in more detail, the resin 28 is selected to be chemically reactive with the hardener 24. The resin 28 is also selected to be of a sufficiently low viscosity to enable it to flow and mix with the matrix 24 once the microcapsules 22 have ruptured. In this regard, a resin with a room temperature (e.g. 25 °C) viscosity of between approximately 300 mPa.S and approximately 1000 mPa.s, preferably between approximately 550 mPa.S and approximately 950 mPa.s has been found to be particularly effective.

Suitable adhesive resins are, for example, epoxy resins comprising of diglycidyl ethers of bisphenol A, bisphenol F, aliphatic diols, polyols or any other suitable material which can react with the hardener and which have a sufficiently low viscosity. Suitable epoxy resins include BPA / BPF blends with difunctional reactive thinners. Examples of suitable commercially available products include Epinal KR 44.47 from BTO Epoxy (which has a viscosity at 25 °C of 550 to 950 mPas), Araldite® GY 794 from Huntsman (which has a viscosity at 25 °C of 650 to 750 mPas), Araldite® GY 764 from Huntsman (which has a viscosity at 25 °C of 350 to 550 mPas), EPIKOTE Resin 355 from Hexion (which has a viscosity at 25 °C of 400 to 600 mPas) and EPIKOTE Resin 357 (which has a viscosity at 25 °C of 600 to 800 mPas).

A mixture of BADGE, BFDGE and hexandiol DGE, such as Epoxide IR 77.43 from BTO Epoxy, is a particularly preferred resin, since it results in particularly good adhesion to metals of the sort that might be used in jewellery making.

Turning now to the matrix, the matrix 24 has different viscosity characteristics to the adhesive resin 28. In particular, the matrix 24 is configured to be a paste-like material (also referred to as semisolid material) of a sufficiently high viscosity that it can remain on the surface of the protective layer 18 of the decorative element without dripping off. It is also selected to form a sufficiently strong bond with the protective layer 18 on the support surface 14 of the decorative element 10 that it will cling to the surface 14 without dissociating, whilst being sufficiently non-tacky to enable easy handling of the decorative elements without the adhesive layer 20 sticking to the user.

In order to achieve these optimum properties, the matrix 24 comprises two components: a hardener component and a rheology additive. Typically, these components are provided in a solvent, such as water. However, as the skilled person would understand, at least part of the solvent present in the matrix may evaporate from the composition following application to the decorative element.

The rheology additive increases the viscosity of the matrix compared to that of the hardener alone. The rheology additive has several effects as a result. Firstly, it increases the viscosity of the matrix 24 to provide the viscosity needed to prevent the matrix 24 from dripping off the decorative element. Secondly, it slows down and/or reduces the sedimentation of the microcapsules 22 in the matrix 24. As such, the mixture may stay more homogeneous for longer periods of time, thereby resulting in more homogeneous mixing of the resin 28 and the hardener in the matrix 24 when the latter is released, ultimately resulting in stronger bonds. Thirdly, the increased viscosity reduces or prevents the movements of the microcapsules 22 in the matrix 24 upon application of pressure, which movement can otherwise result in a reduction in the amount of microcapsules 22 that break upon application of the threshold pressure (because the microcapsules 22 may "roll away" rather than being squeezed between the decorative element and the surface on which it is applied to cause rupture).

Advantageously, the matrix with the rheology additive may have a viscosity such that a force of at least 0.2 N/mm², preferably at least 0.3 N/mm² or at least 0.4 N/mm² is necessary to move an element partially embedded within the matrix. By contrast, the matrix without the rheology additive may have a viscosity such that a force of 0.1 N/mm² or less is sufficient to move an element partially embedded within the matrix.

The hardener component may, for example, be a liquid amine hardener. In this case, the liquid amine hardener provides the majority of the amine groups capable of crosslinking with the adhesive resin 28 during curing, and thus provides the primary hardening function. A particularly preferred hardener is, for example, a polyamidoamine, such as the commercially available product 'Itamid F' available from ddChem® or a phenalkamine, such as the commercially available product 'Ultralite 2009 SF' available from ddChem®.

The rheology additive may be in the form of a solid, a liquid or a polymeric dispersion, as will be described further below. The rheology additive may be present in a ratio of up to approximately 50% of the total weight of the matrix. Preferably, the rheology additive is present in a ratio of at least 20% of the total weight of the matrix. Excessive amounts of rheology additive may disrupt the formation of a network involving the resin and the hardener, thereby weakening the adhesive bond. Conversely, too low amounts of rheology additives may not be sufficient to have the full desired effects previously mentioned.

Considering the rheology additive in more detail, in a first example, the rheology additive additionally performs a binding function, and hence may be referred to as a "binder". To this end, the binder additionally prevents separation between the microcapsules 22, the hardener and any water that may be present in the matrix 24, which may otherwise gel for example due to the presence of surface charges on the microcapsules 22. In such embodiments, the binder provides extra amino groups capable of crosslinking with the resin after the microcapsules have ruptured to contribute to the adhesive bond.

To increase the viscosity of the matrix, the binder has a higher viscosity than the hardener at room temperature. In particular, the binder is a material that has a waxy consistency at room temperature.

In the embodiment described, the binder component is an amine-epoxy adduct (i.e. a direct product of a reaction between an amine and an epoxy resin). In particular, the amine-epoxy adduct may be an amino-oligomer, such as Epilink 701 (a polyamine epoxy resin adduct emulsion available from AirProducts®), Anquamine® 401 (a modified aliphatic amine / polyamine polymer available from AirProducts®) or Anquamine® 721 (a polyamine polymer solution available from AirProducts®).

In the embodiment described here, the matrix is a 1:1 ratio by weight of the binder to the hardener, though other appropriate ratios can be used. In particular, ratios between 0.5:1 and 2:1 may be used depending on the viscosity of the resulting matrix.

Thus, by virtue of the rheology additive, the matrix 24 has the desired characteristics to ensure that it can remain on the surface of the protective layer 18 of the decorative element 10 without dissociating or dripping off, and that the microcapsules 22 remain homogeneously dispersed in the matrix and break under the chosen threshold pressure.

In another example, the rheology additive comprises solid particles that, in addition to increasing the viscosity of the matrix 24, have a physical effect on the microcapsules when pressure is applied to the adhesive 20, increasing the proportion of capsules that break upon application of pressure. Such rheology additives may also be referred to as abrasives or thickeners.

The solid particles are preferably inert such that they do not interfere with the reactive components of the adhesive 20, and preferably are not of a composition that can be attacked by any other component of the matrix, such as the hardener. Suitably, the particles may be inorganic. The abrasive is preferably a fine powder, comprising particles with an average diameter below about 10 µm. For example, the abrasive may be a fine powder comprising particles with an average diameter between about 1 µm and about 10 µm.

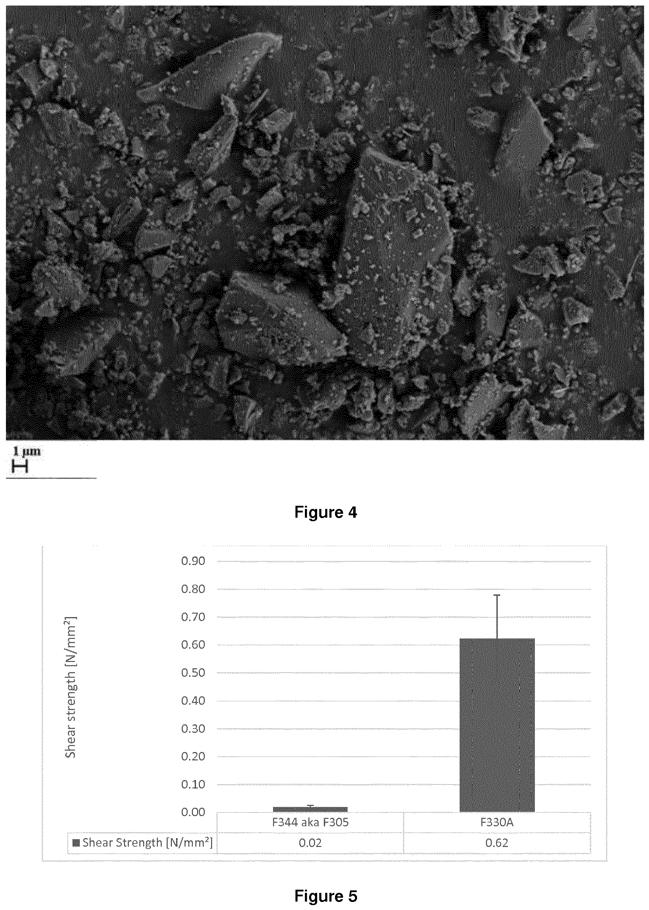

Suitable inorganic powders include fused silica powders (also referred to as Quartz powder or amorphous SiO₂ powder) and aluminium oxide (Al₂O₃) powders. For example, fused silica powders commercially available under the trade name AMOSIL® FW600 and alumina powders commercially available under the trade name Baikalox CR6 (D50 = 0.5 µm, D90 =1.4 µm, D20 = 0.35 µm) may be particularly suitable. Amongst these rheology additives, fused silica powders and in particular AMOSIL® FW600 are particularly preferred. Indeed, as shown in Figure 4 which shows a scanning electron microscope picture of a sample of AMOSIL® FW600 (magnification 2500 x), such powders may advantageously present sharp edges that may further increase the proportion of microcapsules that break under pressure.

It is further preferable if the solid particles forming the abrasive do not have a sponge-like morphology. Indeed, sponge like morphologies may represent weakness points for infiltration of humidity and other compounds that may weaken the bond formed by the adhesive when cured, thereby reducing the chemical stability of the adhesive.

In another example, polymer dispersions may also suitably be used as a rheology additive. For example, polyurethane dispersions may be used. However, such rheology additives may be less favourable in some environments than inorganic powders, as their chemical stability may not be as advantageous.

Embodiments are also envisaged in which more than one rheology additive is present. In particular, one or more binders, abrasives and/or polymer dispersions, or combinations thereof, may be used.

In addition to the hardener and rheology additive, the matrix may further comprise one or more dispersing agent(s). The dispersing agents may help to prevent aggregation of the microcapsules, and/or of the rheology additive when it is provided as particles. For example, a negatively charged dispersing agent may be used to disperse the microcapsules. A dispersing agent such as a polyetherphosphate, such as the dispersing agent commercially available as Tego Dispers 656 from Evonik may be used. Many types of dispersing agents may be used to help preventing aggregation of abrasive particles, such as those commonly used to disperse pigments in inks and paints. For example, the dispersing agent commercially available as DISPERBYK-90 (a high molecular weight block copolymer with pigment affinic groups) may be used.

Additional additives such as mixtures of dispersing agents and thickeners may be used particularly to prevent the settling of the microcapsules during coating, before the adhesive dries on the decorative element. For example, a synthetic layer silicate such as that commercially available as Laponite SL25 (where the silicate is combined with a dispersing agent) may be used for this. Such additives may advantageously be present at concentrations of between 1 and 4% by weight of the matrix composition, Concentrations between 2 and 3% by weight have been found to be particularly beneficial.

Considering the microcapsules 22 now in more detail, the microcapsules 22 are designed to separate the resin 28 from the matrix 24 until the decorative element 10 is ready to be adhered to a decorative surface.

The microcapsules 22 are configured to rupture when a threshold pressure is applied to the microcapsules 22. This rupture causes the resin 28 to flow into the matrix 24 and react with the hardener.

The threshold pressure is carefully tuned so as to be between approximately 1 N/mm² and approximately 4 N/mm². In this way, the microcapsules 22 are capable of rupturing under a relatively low pressure of 4 N/mm² which can be easily and deliberately applied by hand, but the microcapsules 22 will not typically rupture at a pressure below 1 N/mm² or 0.5 N/mm² which is the sort of pressure that might feasibly be applied during the course of handling and transportation.

The threshold pressure is tuned by the materials and structure of the microcapsules 22. For example, the diameter of the microcapsules 22, the proportion of resin inside the microcapsules 22, and the material and thickness of the outer wall 26 of the microcapsules 22, play a role in the threshold pressure of the microcapsules 22 as will be discussed below.

The diameter range for the microcapsules 22 is important for the stability of the microcapsules 22. A relatively large diameter relative to the wall thickness runs the risk of the microcapsules 22 rupturing under their own weight, while a relatively small diameter relative to the wall thickness poses manufacturing difficulties, and restricts the volume of resin 28 that can be contained in each microcapsule 22.

Owing to the production method of the microcapsules (described in more detail below), the microcapsules are not typically of identical diameters, but have a statistical distribution of capsule diameters. In particular, the size distribution may be defined by a lower diameter boundary, an upper diameter boundary, and a peak position (corresponding to the most frequently occurring diameter). The diameters referred to in this specification refer to the peak position of the statistical distribution.

The inventors have found that a suitable diameter range is between approximately 1 µm and approximately 300 µm, which achieves a balance between stability and ease of manufacture. A diameter range of approximately 30 to approximately 150 µm is particularly preferred when using polyacrylate capsules. A diameter range between 20 and 60 µm is particularly preferred when using aminoplast polymer capsules.

The proportion of the resin 28 to the proportion of the outer wall 26 of the microcapsules 22 is carefully selected. Because the material of the outer wall 26 does not take part in the curing reaction, and so higher weight proportions of wall material could disrupt the curing process, leading to a poor adhesive bond. For example, a ratio of the resin to the outer wall material by weight may be between approximately 60% and approximately 96%. The inventors have found that in a particularly preferred embodiment the ratio is between approximately 75% and approximately 95%. This ratio ensures there is enough resin 28 to react with the hardener to completely cure.

The outer wall 26 of the microcapsules is made of a material which is chemically resistant to both the adhesive resin 28 inside, and the matrix 24 outside the microcapsules 22. In addition, the strength of the outer wall material 26 must be high enough to hold the weight of the resin 28 inside but must also be low enough to be able to rupture at a threshold pressure that is lower than 4 N/mm². Polymers such as polyacrylate, aminoplast polymers (such as urea formaldehyde resin, melamin-formaldehyde resin, or urea-melamin-formaldehyde resin), alginate or other suitable polymers or other materials may be used, which offer chemical resistance to adhesive resins 28 and the matrix 24, and also possess the necessary strength properties.

The thickness of the outer wall 26 is a factor that contributes to the rupture strength of the capsules: thus, the thickness is selected to allow the microcapsules 22 to rupture at a threshold pressure in the range of 1 N/mm² to 4 N/mm². The inventors have found that a suitable thickness for the outer wall 26 materials listed in the paragraph above is approximately 0.5 µm to approximately 2 µm. A thicker outer wall 26 would require higher pressures to rupture it and would not be suitable for adhering fragile decorative elements by hand, whilst a thinner outer wall 26 would make the microcapsules 22 too sensitive to pressure activation.

In the adhesive layer 20, the various parameters of the microcapsules 22 can therefore be used to tune the threshold pressure of the microcapsules 22, and hence the activation pressure of the adhesive 20. The presence of the rheology additive in the matrix 24 ensures that the adhesive can form a semi-solid that stably maintains the matrix and the microcapsules as a homogenous layer that remains on the support surface 14 of the crystal 10. In this way, the adhesive is apt to be pre-applied to the support surface 14 of the crystal 10 so that it is ready for activation upon application of the threshold pressure, which can be readily applied by hand.

A method of making acrylate based resin-filled microcapsules 22 will now be described.

First, an alkali metal salt and an anionic surfactant are dissolved in water to form an aqueous phase. An acrylate capable of being polymerised is added to the aqueous phase along with a resin 28 and one or more radical initiators which initiate the polymerisation of the acrylate to form the outer wall 26 material of the microcapsules around the resin. In the embodiment now described, two radical initiators are used. After the polymerisation is complete the mixture is poured into cold water where the microcapsules capsules are allowed to sediment.

In this specific embodiment, poly(octadecylacrylate) forms the material for the outer wall 26, while the resin 28 is an epoxy resin. A method for making poly(octadecylacrylate) microcapsules is described here.

First, a mixture of potassium chloride and sodium dodecyl sulfate are dissolved in distilled water and heated up to 70 °C. This mixture is known as the 'aqueous phase'. In this phase, sodium dodecyl sulfate acts as a surfactant to stabilize the resin droplets ('organic phase', see below) in the aqueous phase. Other surfactants known in the art may be used. Without wishing to be bound by theory, is it believed that potassium chloride may contribute to stabilizing the growing poly(acrylate) chains (see below) by adjusting the ionic strength of the aqueous phase. Other inert anionic agents may be used, as known in the art.

Next, IR 77.43 Epoxy resin, octadecylacrylate, hexylacrylate and polyethylene glycol (PEG) dimethacrylate are mixed and heated to 70°C under continuous stirring. This mixture is known as the 'organic phase'. After the organic phase components are homogeneously mixed, benzoyl peroxide is added and stirred. The aqueous phase and the organic phase are added together and stirred, and ammonium peroxodisulfate is added to the mixture.

The ammonium peroxodisulfate and benzoyl peroxide act as first and second radical initiators respectively. The first and second radical initiators initiate polymerization of the acrylates to form the outer wall around the epoxy resin material.

The use of two different radical initiators leads to a faster and more controlled polmerisation reaction than would be achieved with only a single radical initiator. This results in more stable, uniform and spherical microcapsules 22. Because the diameter of the microcapsules controls the threshold pressure, uniformity of the microcapsules allows accurate control of the threshold pressure of the microcapsules 22. The capsule stability guards against capsules rupture without application of the threshold pressure.

In this particular embodiment the second radical initiator is benzoyl peroxide. However, other radical initiators may be used as the second radical initiator. For example, the second radical initiator may be any suitable peroxide, such as benzoyl peroxide (as described above) or dilauryl peroxide.

After a period of continued stirring and heating, the dispersion is carefully poured in water at 6 °C and the microcapsules 22 are allowed to sediment.

A method of making melamine-formaldehyde resin filled microcapsules 22 will now be described.

First, a melamine formaldehyde pre-condensate is dissolved in distilled water with a polymeric stabilizer colloid to form an aqueous phase. Next, an epoxy resin composition is added to the aqueous phased and dispersed to form an emulsion by continuous stirring. The pH of the aqueous phase is then lowered to between 3 and 4 by addition of an acid, which catalyses the polycondensation of the precursor, forming a melamine formaldehyde polymeric shell, The agitation and temperature conditions prior to and during polymerization are carefully controlled to ensure that capsules having the required diameter, wall thickness and wall stability and tightness are obtained.

Once the resin-filled microcapsules 22 have been made (either acrylate-based or melamine-formaldehyde capsules), the microcapsules 22 are subsequently combined with the matrix 24 to make the adhesive layer 20. To achieve this, the microcapsules 22 are homogeneously dispersed in the matrix 24 by mechanical mixing.

In one example, a matrix mixture is pre-mixed, before being combined with the capsules. In this case, the hardener and rheology additive, and any other matrix components are mixed together in a mixer at between 2000 and 5000 rpm between 2 and 10 minutes. The matrix mixture may then be added to an aqueous capsule dispersion and mixed for 4 to 12 minutes at no more than 1000 rpm. Preferably, the mixture is mixed at about 800 rpm. This process may be particularly suitable when the rheology additive is a liquid binder.

Alternatively, the microcapsules may be mixed with the hardener and any other optional additives, and this mixture may then be combined with a separately obtained mixture of solid rheology additive.

When a dispersing agent is used to help with dispersion of the microcapsules, the dispersing agent may be mixed with the microcapsules prior to mixing the microcapsules with the other elements of the matrix. Suitably, the microcapsules may be mixed with the dispersing agent at a speed between 800 and 1000 rpm for 2 to 10 minutes, preferably around 4 minutes. The inventors have found two rounds of mixing of about 2 minutes each to be particularly suitable. Preferably, the mixture of dispersing agent and microcapsules is then allow to sit for at least 1 hour, preferably about 2 hours, in order to enable the dispersing agent to absorb on the particles.

The microcapsules (optionally pre-mixed with a dispersing agent) may then be mixed with the hardener (and any other optional liquid rheology additive) for 4 to 12 minutes at no more than 1000 rpm. Preferably, the mixture is mixed at a speed between 800 rpm and 1000 rpm. A mixing time of about 4 minutes has been found to be particularly suitable.

When a dispersing agent is used to help with dispersion of the solid rheology additive, the solid rheology additive may be mixed with the dispersing agent in an aqueous solution at a speed of between 1000 rpm and 5000 rpm, preferably between 1000 rpm and 3000 rpm for 2 to 10 minutes. The inventors have found that a first round of about two minutes at a first speed followed by a second, shorter round at higher speed is particularly suitable. For example, a first round of mixing for about 2 minutes at about 2000 rpm followed by a second round of about one minute at about 3000 rpm may be used.

The solid rheology additive (optionally pre-mixed with a dispersing agent) may then be mixed with the mixture of microcapsules, hardener and any other optional liquid rheology additive, at a speed of between 800 rpm and 1000 rpm for about one minute.

The ratio of microcapsules to matrix by weight may be between approximately 1 : 1 and approximately 3 : 1.

To make the adherable element 1, a small sample of adhesive is taken from the batch of adhesive and is applied to the support surface 14 of the crystal 10. When applying the adhesive to the support surface 14, care must be taken to not exert a pressure greater than about 1 N/mm² as this could cause the microcapsules 22 to rupture accidentally, which would result in premature curing.

The matrix 24 and microcapsules 22 are preferably mixed immediately prior to application of the adhesive. This ensures that the microcapsules 22 are evenly dispersed within the matrix 24 in the adhesive batch at the time the small sample of adhesive is taken from the batch. This in turn ensures that the ratio of matrix 24 to microcapsules 22 in the sample is substantially the same as the ratio of matrix 24 to microcapsules 22 in the batch.

The adhesive layer 20 is applied with a particular desired thickness. For example, thickness of the adhesive layer may be between approximately 100 µm and approximately 2 mm. Preferably, the layer is approximately 500 µm thick. This thickness is thick enough to ensure there is enough adhesive to form a secure bond from the support surface 14 to the surface. A thicker layer than this would result in too much excess adhesive being squeezed out on to the outward facing surface 12 when the decorative element 10 is adhered onto the decorative surface 1 which would then be difficult to wipe off cleanly.

Once the adhesive layer 20 is applied to the support surface 14 of the crystal 10, the resulting adherable element 10 can be stored, transported and used as necessary. Typical handling should not result in pressures greater than 1 N/mm², and therefore the adhesive layer 20 should not be activated accidentally during handling. Additional protective measures may be put in place to ensure that the adhesive layer 20 is not accidentally activated.

When a user wishes to adhere the decorative element 10 to a decorative surface 1 to make a decorative article, the user can simply press the decorative element 10 onto the decorative surface, applying the threshold pressure to rupture the capsules, thereby causing the adhesive layer 20 to cure.

The tensile strength of the adhesive bond after curing is in the region of approximately 5 to 15 MPa. This strength is sufficient to ensure proper adhesion of the decorative element 10 to the decorative surface.

Because the threshold pressure is less than 4 N/mm², the user can easily apply the threshold pressure by hand, without the need for tools or equipment, and without risk of damaging the decorative element 10, which can be fragile. Because the adhesive is pre-applied there is no need for the user to apply glue in a separate process step, making the process faster and cleaner. Furthermore, because the pre-applied adhesive is in an uncured state until the threshold pressure is applied, the user is not subjected to the time-pressure that would otherwise occur when using a conventional two-part adhesive, allowing more accurate placing of the decorative element. By virtue of the pre-application stage, the adhesive layer 20 has already been pre-applied in the right amount and at the right thickness, meaning that there is no risk of under- or over- application of the adhesive.

Thus, the adhesive system 20 provides a pre-applied means for conveniently and accurately adhering the decorative element 10 to a decorative surface, without the need for tools or equipment.

### Examples

### Example 1 - Method of making acrylate microcapsules

Table 1 below summarises the chemical reagents, and the quantities of the chemical reagents required to make poly(octadecylacrylate) microcapsules filled with commercially available epoxy resin IR 77.43 (also known as KR 44.47) from BTO Epoxy. The following quantities are suitable to make approximately 30.6 grams worth of microcapsules filled with epoxy resin IR 77.43.

The method for making poly(octadecylacrylate) microcapsules filled with resin is described below.

17 g of potassium chloride and 0.3 g of sodium dodecyl sulfate are dissolved in 200 g of distilled water and heated up to 70 °C. This mixture is known as the 'aqueous phase'.

Next, 20 g of IR 77.43 Epoxy resin (which forms the adhesive resin), 9.0 g octadecylacrylate, 0.6 g of hexylacrylate and 0.4 g of polyethylene glycol (PEG) dimethacrylate are mixed and heated to 70°C under continuous stirring. This mixture is known as the 'organic phase'.

After the organic phase components are homogeneously mixed, 0.1 g of benzoyl peroxide is added and stirred.

The aqueous phase and the organic phase are added together and stirred for 45 minutes at 70°C whilst some sodium peroxdisulfate is added. After this time, the remaining ammonium peroxodisulfate is added to the mixture and stirring and heating is continued for a further 55 minutes.

A stirring speed of between about 300 rpm and about 450 rpm is used to produce microcapsules of the desired size. In particular, the slurry is initially stirred at about 450 rpm and the speed is then reduced to between about 300 rpm and about 350 rpm. A propeller stirrer may be used for this, such as e.g. a 4 blades propeller.

Finally, the dispersion is carefully poured into 600 ml of water chilled to 6°C, and the microcapsules are allowed to sediment. Afterwards the microcapsules are decanted and washed with cold water.

**Table 1: Chemical reagents and quantities to make poly(octadecylacrylate) microcapsules filled with epoxy resin IR 77.43**

| | **Chemical Reagent** | **Weight [g]** | **[%]** |
|---|---|---|---|
| Aqueous Phase | Distilled water | 200.0 | 92.04 |
| | Potassium chloride | 17.0 | 7.82 |
| | Sodium dodedylsulfate | 0.3 | 0.14 |
| Sum (aqueous phase) | | **217.3** | **100.00** |
| | | | |
| Organic phase | Epoxy resin IR 77.43 | 20.0 | 65.36 |
| | Octadecylacrylate | 9.0 | 29.41 |
| | Hexylacrylate | 0.6 | 1.96 |
| | Poly(ethylenglycol)dimethycrylate | 0.4 | 1.31 |
| | Benzoylperoxide | 0.1 | 0.33 |
| | Ammonium peroxodisulfate | 0.5 | 1.63 |
| Sum (organic phase) | | **30.6** | **100.00** |

### Example 2 - Method of making melamine formaldehyde microcapsules

A first sample of microcapsules (Sample A) was prepared in a 1000 ml glass beaker placed in an oil bath with heating function, and equipped with an ex-centred stirring mechanism. Water evaporation during the process was controlled by covering the beaker with aluminium foil. Table 2 below shows the ingredients that were used to prepare the microcapsules of Sample A. The weights of the components are provided as dry ingredients weights and aqueous solution weights, and percentages of the aqueous solutions in the total suspension.

**Table 2. Ingredients used for the preparation of the microcapsules of Sample A**

| **Ingredient** | **Amount (g) dry ingredients / aqueous solution** | **%wt of total suspension** |
|---|---|---|
| Wall material - Luracoll SD | 8.54 / 12.8 | 2.80 |
| Stabiliser / protective colloid - Lupasol PA140 | 4.2 / 21.0 | 4.59 |
| Core material - Epoxide resin Epinal KR 44.47 | 192.5 | 42.07 |
| Melamine (1,3,5-triazin-2,4,6-triamine) | 3.97 / 14.7 | 3.21 |
| Formaldehyde scavenger - Urea | 6.0 / 26.0 | 5.68 |
| Catalyst - Formic acid | 0.26 / 2.6 | 0.57 |
| Continuous phase - Dl-Water (in total) | 188 | 41.08 |
| Total | 457.6 | 100 |

The wall material used in this example is a melamine formaldehyde pre-condensate commercially available as Luracoll SD (from BASF) comprising 1,3,5-Triazin-2,4,6-triamin as a methylated polymer with formaldehyde. The commercial formulation used (Luracoll SD) comprised between 60 and 80% by weight of the pre-condensate by weight, in water.

A stabiliser / protective colloid was used in this example, which is a polymer based on acrylamidosulfonate, commercially available as Lupasol PA 140 (from BASF). The commercial formulation used comprised about 20% by weight of solid content, in water.

The resin or 'core material' used in this example is an epoxy resin commercially available as Epinal KR 44.47 from bto-epoxy GmbH. The commercial composition used comprised the following components: bisphenol A (BPA, also known as 4,4'-lsopropylidenediphenol) in an amount of between about 45% by weight and about 65% by weight, bisphenol F (BPF, also known as 4,4'-dihydroxydiphenylmethane) in an amount of between about 10% by weight and about 30% by weight, and 2,2'-[hexane-1,6-diylbis(oxymethylene)] dioxirane (also known as hexanediol diglycydyl ether) in an amount of between about 5% by weight and about 25% by weight.

The following process steps were followed:
1. Luracoll SD and Lupasol PA140 were dissolved in 150 g of deionised water (DI-water) in the beaker.
2. The epoxy resin was added to the solution under agitation with a dissolver disk stirrer at 1100 rpm, and maintained under these agitations conditions for about 5 minutes in order to form a pre-emulsion.
3. When the pre-emulsion was homogeneous, formic acid was added to the mixture so as to adjust the pH to between 3 and 4, in order to start the condensation reaction, under the same agitation conditions (1100 rpm), at 30 °C.
4. Emulsification was performed by maintaining the mixture at 30 °C under agitation with a dissolver stirrer at 1100 rpm until the desired droplet size is reached (about 40 minutes).
5. The dissolver stirrer was exchanged for a helical stirrer and the emulsion was gently stirred (between 200 and 44 rpm) for another 30 minutes at 30 °C.
6. 38 g of DI-water was added to the dispersion, which was heated to 60 °C and maintained at this temperature with the same agitation conditions as in step 5, for 30 minutes.
7. A melamine dispersion comprising 27% melamine in acidified DI-water (3.97 g of melamine and 10.73g DI-water and formic acid to pH 4.5) was added to the microcapsule dispersion at a constant rate over 90 minutes, with the same agitation conditions as in steps 5 and 6, and a temperature of 60 °C.
8. The dispersion was maintained in the same temperature and agitation conditions as in step 7 for 2 hours.
9. A solution of urea in DI-water (6.0 g urea, 20 g DI-water) was added to the dispersion, and the dispersion was allowed to cool to room temperature (20-25 °C) passively, with continued gentle agitation (e.g. between about 200 and about 400 rpm).
10. When the solution reached room temperature, the solution was filtered through a 400µm mesh sieve in order to remove debris and abnormally big capsules. Less than about 1 wt% of the solution was removed through this process, all of which was solid.

As can be seen from the proportions in Table 2, the epoxy resin represented about 45% by weight of the total weight of the suspension, and another approx. 50% by weight of the suspension was water. Therefore, the process applied successfully resulted in encapsulation of very high loadings of epoxy resin. The particle size of the capsules in this sample was measured using a laser diffraction method (with a particle size analyser from Beckmann Coulter, LS13320) using both the Fraunhofer and Mie models, The peak maximum particle size was measured as about 55-65 µm. Further, the solid content of the microcapsule slurry B was measured using a SMART 5 Mircowave Moisture analyser from CEM (using max. 50% power, max 40 °C). The sample had a solid content of about 45±1 % by weight. The viscosity of the microcapsule slurry was measured using a Brookfield Viscometer (Model DV-II + using settings #2 100 rpm and #2 100 rpm). The viscosity was measured as below 1000 mPas prior to addition of any further additives.

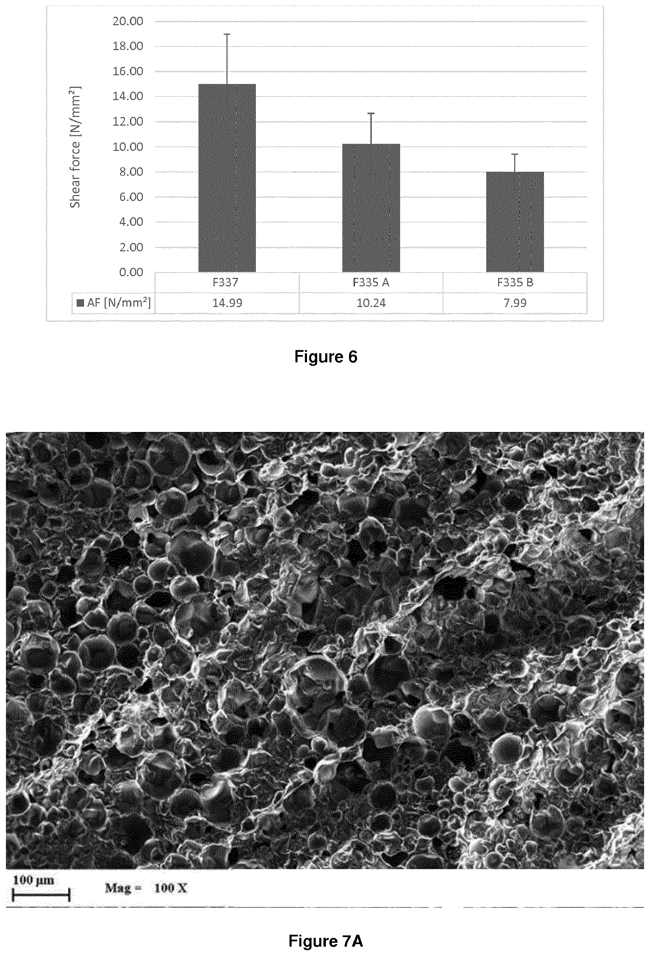

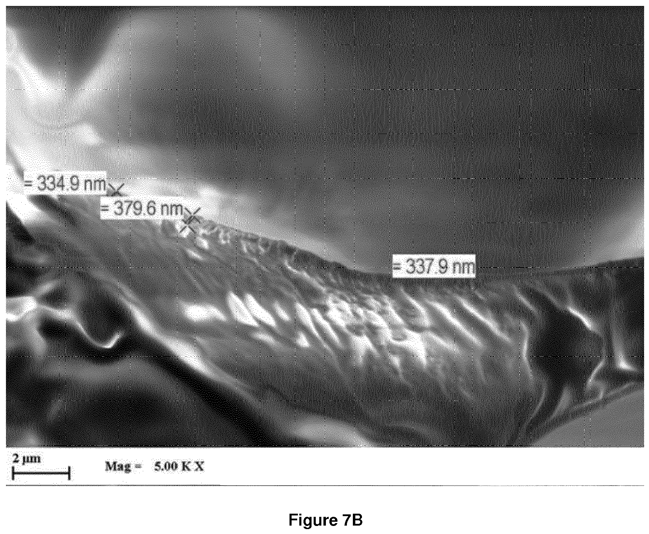

Figure 7A shows a scanning electron microscope (SEM) image of the resulting microcapsules. To obtain the SEM sample, samples of capsules were frozen in liquid nitrogen then sand paper was used to open some capsules and gold/palladium was sputtered on the sample for 3 minutes. As can be seen on Figure 7A, capsules with an average size of 60 µm were obtained. Figure 7B shows a cross section through a capsule in the sample shown on Figure 7A. As can be seen on Figure 7B, the capsules according to the example have regular walls with a thickness of about 300 nm. In particular, the wall thickness was measured for N≥10 capsules, and the following measurements were obtained: average = 378 nm, standard deviation = 102 nm, minimum = 185 nm, maximum = 553 nm. Without wishing to be bound by theory, it is believed that the relatively large standard deviation may be due at least in part to variations in the angles of fracture of the microcapsules (i.e. where the plane of fracture through some microcapsules may not be perpendicular to the surface of the microcapsules, leading to an overestimation of the thickness of the wall).

### Example 3 - Matrix Formulations

As previously described, the matrix comprises two components: a hardener component and rheology additive. In the embodiment of the matrix described on page 3, paragraph 3, the matrix consists of commercially available hardener called ddChem "Itamid F" mixed with a commercially available binder Air Products "Epilink 701" in a 1:1 weight ratio. However, the matrix is not limited to this formulation, and alternative combinations of hardeners and binders can be used to form the matrix.

Examples of alternative matrix formulations are provided in Table 2 below.

**Table 3: Alternative matrix formulations showing the rheology additive used, the hardener used and the weight ratio of the rheology additive to the hardener component**

| | **Rheology additive** | **Hardener Component** | **Weight ratio of Rheology additive : Hardener** |
|---|---|---|---|
| **Alternative Matrix 1** | Air Products "Anquamine 401" | Cardolite "UltraLite 2009 SF" | 1 : 1 |
| **Alternative Matrix 2** | Air Products "Epilink 701" | Cardolite "UltraLite 2009 SF" | 1 : 1 or 7 : 3 |
| **Alternative Matrix 3** | Air Products "Anquamine 721" | Cardolite "UltraLite 2009 SF" | 1 : 1 |
| **Alternative Matrix 4** | Polyurethane dispersion and Epilink 701 | Cardolite "UltraLite 2009 SF" | polyurethane to hardener: 2.4:1 to 0.6:1 |
| | | | Epilink 701 to hardener: 1:1 |
| **Alternative Matrix 5** | Alumina powder "Baikalox CR6" | Cardolite "UltraLite 2009 SF" | 5:95 to 1:9, 1:4 or 1:1 |
| **Alternative Matrix 6** | Fumed silica powder "AMOSIL® FW600" | Cardolite "UltraLite 2009 SF" | 1.3:1 to 2.2:1 |

### Example 4

Various adhesives were made and applied to test substrates to confirm the efficacy of the adhesives in adhering to the substrate while in the pre-cured state, and in activating under pressure to form an adhesive bond.

### Adhesive A

Microcapsules were made according to the method of Example 1.

A matrix was made combining ddChem "Itamid F" mixed with Air Products "Epilink 701" in a 1:1 weight ratio.

The microcapsules and matrix were mixed together by mechanical mixing in a weight ratio of microcapsules to matrix of 1.84 : 1 after drying for 1 day when applied as a layer to a crystal (i.e. after evaporation). The weight ratio of aqueous capsule slurry to matrix was about 4.4:1 and the slurry gas a capsule content of about 42% by weight.

The resulting adhesive had a paste-like consistency after drying for 1 day when applied as a layer to a crystal.

The adhesive was applied in a layer of 500 µm thickness to a crystal. On application, the adhesive adhered effectively to the crystal and did not run from the surface.

The crystal was placed over a decorative surface with the adhesive arranged between the crystal and the surface. A force of 4 N/mm² was applied to the crystal. On application of the force, curing was initiated.

After a period of 7 days at room temperature, the resin was fully cured. The resulting bond had a strength of 10.41 N/mm² ± 1.97 N/mm².

### Adhesive B

Microcapsules were made according to the method of Example 2.

5g of microcapsules from Sample A above were added to a mixing vessel (Speedmixer®) together with 0.06 g of a dispersing agent (polyetherphosphate, commercially available as Tego Dispers 656 from Evonik). The components were mixed at 800 -1000 rpm for two rounds of 2 minutes. The mixture was then allowed to sit for 2 hours in order to enable the dispersing agent to adsorb on the microcapsules.

0.37 g of a rheology additive (dispersion of synthetic layered silicate with a dispersing agent, in water - commercially available as Laponite SL25 from BYK) was added and mixed with the rest of the components for one minute at 800 -1000 rpm. 0.7 g of an epoxy curing agent (also referred to as hardener, commercially available as Cardolite UltraLite 2009 SF®) was added and mixed at 800 -1000 rpm for 4 minutes.

Separately, 36 g of a fused silica powder comprising SiO₂ particles below 10 µm (available commercially as Amosil® FW600) was added together with 7.2 g of a dispersing agent (high molecular weight block copolymer with pigment affinic groups, commercially available as DISPERBYK-90) and 16.8 g DI-water in a mixing vessel (Speedmixer®). The components were mixed for 2 minutes at 2000 rpm and a further minute at 3000 rpm.

1.53 g of the silica dispersion was added to the microcapsules and hardener solution, and the resulting composition was mixed at 800-1000 rpm for one minute.

The composition was applied to a set of test substrates (metallic cylinders having a diameter of approximately 1 cm) as a layer of approximately 1 mm, and allowed to dry for 1 day. The test substrates were then adhered to a corresponding metallic surface by applying a calibrated of 4 N/mm². The bond was allowed to cure for 7 days at room temperature then the tensile strength of the bond was tested using a subset of the bonded substrates. A tensile strength of 13.3 N/mm² ± 2.53 N/mm² was measured. Some of the bonded substrates were subject to a climate stress test by placing them in an atmosphere with 92% relative humidity and 55 °C for 5 days. After this period, the tensile strength of the bond was tested. A tensile strength of 8.4 N/mm² ± 1.5 N/mm² was measured.

### Adhesive C

An adhesive comprising the same microcapsules as adhesive B but with a matrix of Epilink 701 and Cardolite UltraLite 2009 SF® in a 1:1 ratio (see alternative matrix 2 above) was prepared and tested in the same manner as Adhesive B. This sample had a tensile strength of 2.51 N/mm² before the climate test and 5.05 N/mm² after the climate test. This data indicates that the use of the rheology additives enables the adhesive composition to result in stronger bonds. This is assumed to be because, owing to the greater viscosity of the matrix when the rheology additive is present, the microcapsules are less likely to be 'displaced' rather than ruptured when a force is applied, such that when the rheology additive is present, a larger proportion of the microcapsules are suitably dispersed and broken by application of the threshold pressure.

### Adhesive D

Adhesive D was made in a similar way as adhesive B, but 10% by weight (relative to the total weight of the matrix composition) of Alumina powder (Baikalox CR6) was used instead of the Amosil® FW600, and a slightly smaller amount of Laponite SL25 was used (2% by weight, relative to the total weight of the matrix composition).

The composition was tested as explained in relation to Adhesive B, leading to a tensile strength of 8.59 prior to the climate stress and 5.34 after the climate test. This data indicates that the aluminium oxide is useful to increase the proportions of capsules that are suitably dispersed and broken by application of the threshold pressure (compared to the sample without rheology additives, sample C), although the effect is not as strong as when using fumed silica powders. However, this performance is more susceptible to degradation after exposure to high temperatures and humidity than compositions with silica powders.

### Adhesive E

An adhesive comprising the same microcapsules as adhesive B but with a matrix comprising Epilink 701 and Cardolite UltraLite 2009 SF® in a 1:1 ratio and a polyurethane dispersion was prepared. Three different amounts of polyurethane were tested: 10% by weight - adhesive E1, 20% by weight - adhesive E2 and 40% by weight - adhesive E3 (relative to the total weight of the adhesive formulation). These samples had tensile strengths of 3.88, 7.46 and 9.86 N/mm² respectively for E1, E2 and E3, before the climate tests. These samples showed tensile strengths of 4.1, 6.26 and 5.65 N/mm² respectively for E1, E2 and E3, after the climate tests. This data indicates that polyurethane is useful to increase the proportions of capsules that are suitably dispersed and broken by application of the threshold pressure (compared to the sample without rheology additives, sample C), although the effect increases with the concentration of polyurethane in the range tested, and is not as strong as when using fumed silica powders. Further, this performance is more susceptible to degradation after exposure to high temperatures and humidity than e.g. samples with silica powders.

### Example 5

Various matrix compositions were prepared and the strength necessary to move a crystal at least partially embedded in the matrix was tested in order to evaluate the viscosity of the different matrix compositions. In particular, a matrix composition comprising microcapsules from Sample A, Tego Dispers 656 from Evonik, Epilink 701 and Cardolite UltraLite 2009 SF® (see Adhesive C above) was compared with a matrix composition that comprises microcapsules from Sample A, Tego Dispers 656 from Evonik, Cardolite UltraLite 2009 SF® and additionally comprises 2% by weight of Laponite SL25 and 30% by weight of AMOSIL®FW600, where percentages are provided relative to the adhesive formulation after drying for 1 day. The results of these tests can be seen on Figure 5, where composition F330A is the composition with the additional rheology additives (AMOSIL®FW600 and Laponite SL25) and composition F344/F305 is the composition without the additional rheology additive. As can be seen on Figure 5, the presence of the AMOSIL®FW600 and Laponite SL25 significantly increases the viscosity of the matrix composition.

### Example 6

Various adhesive compositions were prepared as described in Example 4, Adhesive B, but with varying amounts of fumed silica powder.

In particular, the following amounts of silica powder (AMOSIL® FW600) were used:
Sample F337: 31 % by weight (total weight of the dried adhesive formulation);
Sample F335 A: 21 % by weight (total weight of the dried adhesive formulation);
Sample F335 B: 0% by weight (total weight of the dried adhesive formulation).

As can be seen on Figure 6, tensile strengths of 14.99, 10.24 and 7.99 N/mm² were measured, respectively for the samples comprising 50%, 30% and 0% of the rheology additive (abrasive). This data indicates that increasingly beneficial effects on the tensile strength of the bond created by applying a threshold pressure on the additive can be observed with increasing concentrations of abrasives within the range tested.

## Claims

1. An adherable element comprising a decorative element having a support surface, and a pressure activated adhesive system pre-coated on the support surface of the decorative element for adhering the decorative element to a surface, the adhesive remaining uncured until activated by application of a threshold pressure and comprising:
a matrix comprising a hardener; and
a plurality of microcapsules filled with an adhesive resin, the microcapsules being configured to rupture on application of the threshold pressure, thereby exposing the resin to the matrix and allowing the resin to react with the hardener to form an adhesive bond between the decorative element and the surface;
wherein, the matrix further comprises a rheology additive such that the matrix has a higher viscosity than the hardener at room temperature.

2. The adherable element of claim 1, wherein the matrix comprising the rheology additive has a viscosity such that a force of at least 0.2 N/mm², preferably at least 0.3 N/mm² or at least 0.4 N/mm² is necessary to move an element partially embedded within the matrix.

3. The adherable element of any preceding claim, wherein the rheology additive is a liquid, a polymer dispersion, or a solid powder.

4. The adherable element of any preceding claim, wherein the rheology additive comprises an amine-epoxy adduct material and/or an amino-oligomer, and/or a solid inert powder, preferably wherein the powder has an average particle diameter below 10µm and/or wherein the powder is inorganic.

5. The adherable element of any preceding claim, wherein the hardener comprises an amine.

6. The adherable element of any preceding claim, wherein the rheology additive is present at a concentration of at least 10% by weight of the matrix, preferably at least 20% by weight, and preferably between 20% and 50% by weight of the matrix.

7. The adherable element of any preceding claim, wherein the adhesive resin comprises an epoxy resin, preferably based on the diglycidyl ethers of Bisphenol A, Bisphenol F, aliphatic diols or polyols.

8. The adherable element of any preceding claim, wherein an outer wall of the microcapsules comprises a polymer, preferably selected from the group consisting of polyacrylate, an aminoplast polymer or alginate.

9. The adherable element of claim 8, wherein the outer wall of the microcapsules comprises a melamin-formaldehyde resin.

10. The adherable element of any preceding claim, wherein the ratio by weight of an outer wall of the microcapsules, to the adhesive resin inside the microcapsules is between approximately 4 to 96 and 1 to 2, and is preferably between approximately 1 to 3 and 1 to 1.

11. The adherable element of any preceding claim, wherein the microcapsules are configured such that the threshold pressure is in the range of approximately 1 N/m² to approximately 4 N/m².

12. The adherable element of Claim 11, wherein the microcapsules are between approximately 30 µm and approximately 150 µm in diameter, preferably between 30 µm and 100 µm, or between 30 µm and 60 µm, and/or an outer wall of the microcapsules is between approximately 50 nm and 2 µm thick, preferably between approximately 50 nm and approximately 1500 nm, between approximately 200 nm and 1 µm, such as about 300 to 500 nm.

13. A decorative article comprising a decorative surface and at least one decorative element, obtained by applying the adherable element of any of claims 1 to 16 to the decorative surface and curing the adhesive.

14. A method of making an adherable element comprising a decorative element having a support surface, and a pressure-activated adhesive system pre-coated on the decorative element for adhering the decorative element to a surface, the adhesive remaining uncured until activated by application of a threshold pressure, and the method comprising:
providing a plurality of resin-filled microcapsules being between approximately 1 µm and approximately 150 µm in diameter and having an outer wall with a thickness of between approximately 0.5 µm and approximately 2 µm;
providing a matrix material, the matrix material comprising a hardener and a rheology additive;
mixing the resin-filled microcapsules and matrix material to form the pressure-activated adhesive system; and
applying the pressure-activated adhesive system to at least a portion of the support surface of the decorative element.

15. A method of adhering a decorative element to a decorative surface, the method comprising providing the adherable element of any of claims 1 to 17, placing the adherable element on the decorative surface with the adhesive between the decorative surface and the support surface of the decorative element, and applying a pressure greater than or equal to the threshold pressure to the decorative element, thereby causing the adhesive to form an adhesive bond between the decorative element and the surface.
